# EUROPÄISCHE PATENTSCHRIFT

(11) **EP 0 514 822 B1**
(45) Veröffentlichungstag und Bekanntmachung des Hinweises auf die Patenterteilung: **09.08.1995**
(21) Anmeldenummer: 92108391.1
(22) Anmeldetag: 19.05.1992
(51) Int. Cl.: B28D 1/04, B28D 1/14

(54) **Werkzeug für die Bearbeitung von Beton o.dgl.**
Tool for working concrete or similar materials
Outil pour le travail du béton ou matériaux similaires

(30) Priorität: 23.05.1991 DE 9106315 U; 25.05.1991 DE 9106474 U
(43) Veröffentlichungstag der Anmeldung: 25.11.1992
(73) Patentinhaber: FRIEDRICH BUSSE DIAMANTWERKZEUGE GmbH + Co., D-91126 Schwabach (DE)
(72) Erfinder: Grüneis, Hans, W-8540 Schwabach (DE)
(74) Vertreter: Tergau, Enno, Dipl.-Ing.

(56) Entgegenhaltungen:
- EP-A- 0 162 429
- EP-A- 0 280 835
- EP-A- 0 388 591
- DE-U- 9 106 474
- FR-A- 1 568 331
- US-A- 4 193 671
- PATENT ABSTRACTS OF JAPAN vol. 5, no. 116 (M-80)(788) 25. Juli 1981
- PATENT ABSTRACTS OF JAPAN vol. 7, no. 1 (M-183)(1146) 6. Januar 1983
- SOVIET INVENTIONS ILLUSTRATED Section PQ, Week 41, 21. November 1990 Derwent Publications Ltd., London, GB; Class Q49, AN 90-311457/41

## Beschreibung

Die Erfindung betrifft ein Werkzeug für die Bearbeitung von Beton, auch Stahlbeton, Gestein oder Fels, wie beispielsweise einen Bohrer oder eine Säge, dessen Arbeitskanten mit Schneidkörpern aus metallgebundenen Diamantkristallen armiert sind.

Derartige Werkzeuge sind bekannt (siehe z.B. die EP-A-0 280 835). Sie dienen zum Bohren oder Schneiden der genannten Werkstoffe und werden beispielsweise in der Bauindustrie, aber auch im Bergbau sowie bei der Verarbeitung von Gesteinsmassen aller Art, beispielsweise Basalt, Marmor o.dgl. eingesetzt. Je nach der Natur und Zusammensetzung des zu bearbeitenden Werkstoffes ist auch die Zusammensetzung der Diamant-Schneidkörper gewählt. Die Schneidkörper unterscheiden sich dabei in erster Linie durch die Menge und Größe der eingebundenen Diamantkristalle. Da die zur Verfügung stehenden Sorten derartiger Schneidkörper speziell für bestimmte Anwendungszwecke entwickelt wurden, kommt es bei der Bestückung von Werkzeugen wesentlich darauf an, daß die richtigen Sorten ausgewählt werden und keine Sortenverwechslungen vorkommen.

Um eine deutliche Bezeichnung der einzelnen Sorten durchzuführen, liegt es an sich nahe, die Schneidkörper mit einer unverwechselbaren Kennzeichnung zu versehen, beispielsweise mit aufgebrachten Farbpunkten. Derartige Markierungen haben aber den Nachteil, daß sie leicht abgerieben werden, was schon beim bloßen Lagern und Bewegen der Schneidkörper geschehen kann. Ganz sicher werden aber derartige Farbmarkierungen beim ersten Gebrauch der Werkzeuge völlig beseitigt, so daß dann keine Unterscheidung der Werkzeuge mehr möglich ist.

Der Erfindung liegt die Aufgabe zugrunde, Werkzeuge für die Bearbeitung von Beton, Gestein oder Fels, wie Bohrer oder Sägen, dessen Arbeitskanten mit Schneidkörpern aus metallgebundenen Diamantkristallen armiert sind, derart zu kennzeichnen, daß die Kennzeichnung auch bei reibender Beanspruchung, insbesondere beim bestimmungsgemäßen Gebrauch der Werkzeuge nicht verlorengeht.

Zur Lösung dieser Aufgabe wird vorgeschlagen, daß in wenigstens eine Oberfläche der Schneidkörper wenigstens eine von außen sichtbare Markierung eingesintert ist, die aus einem Werkstoff besteht, der sich farblich vom Bindemittel des Schneidkörpers unterscheidet. Die Markierung kann dabei grundsätzlich eine beliebige Form aufweisen. Als vorteilhaft hat es sich erwiesen, wenn die Markierung eine in Verschleißrichtung des Schneidkörpers verlaufende Spur ist. Zur Kennzeichnung mehrerer verschiedener Sorten können dabei mehrere derartiger strichförmiger Spuren angeordnet sein, die zu einer Art Code zusammengefaßt sind. Eine derartige Kennzeichnung ist möglich und übersichtlich, wenn es sich nur um wenige Sorten, die zu unterscheiden sind, handelt. Kommen mehrere, beispielsweise vier oder gar noch mehr Sorten in Betracht, so ist es vorteilhafter, Markierungsspuren unterschiedlicher Farbe, beispielsweise gelb und rot zu verwenden. Aus welchem Werkstoff die eingesinterten Spuren bestehen, ist dabei grundsätzlich gleichgültig, sofern nur sichergestellt ist, daß die Markierungen dauerhaft im Schneidkörper verankert sind. Dies wird am besten erreicht, wenn der Markierungswerkstoff unter Berücksichtigung der Natur des Bindemittels so ausgewählt wird, daß er mit dem Bindemittel bei der Werkzeugherstellung versintert. Besteht das Bindemittel aus Kobalt- oder Nickelmetall, so hat es sich bei Versuchen des Erfinders bewährt, die Markierungsspur aus Kupfer oder einer bunten Kupferlegierung herzustellen. Von einer "bunten" Kupferlegierung wird hier deshalb gesprochen, weil silberglänzende Kupferlegierungen, wie beispielsweise bestimmte Kupfer-Nickel-Legierungen ungeeignet sind, da sie sich nicht genügend vom Bindemetall Kobalt unterscheiden. Am besten geeignet für die Herstellung roter Markierungen ist Kupfer selbst oder kupferreiche Bronze, für die Herstellung von gelben Markierungen kupferarme Bronze oder Messing. Die mit einzusinternden Legierungen können als Metalldraht oder -stab entsprechender Abmessungen bei der Herstellung der Schneidkörper mit in die Preßform eingebracht und so in den Preßkörper eingepreßt werden. Beim Sintern des Schneidkörpers tritt dann auf dem Wege der bekannten Platzwechselreaktionen ein festes Versintern des Markierungsdrahtes mit den anliegenden Bindemetallteilchen ein.

Die Markierungen sollen vorzugsweise im Bereich der äußeren oder inneren Mantelfläche des Schneidkörpers angeordnet sein. Sie sind dort leicht zu erkennen, so daß Schneidkörper-Verwechslungen vermeidbar sind. Alternativ wird vorgeschlagen, die Markierungen in der Fußfläche des Schneidkörpers anzuordnen, also dort, wo bei Befestigung der Schneidkörper am Trägerwerkzeug die Lötfläche entsteht.

Die Erfindung wird anhand der beiliegenden Zeichnung näher erläutert. Es stellen dar:
- Fig. 1: eine schematische Seitenansicht eines hohen Steinbohrers;
- Fig. 2: eine Draufsicht auf die Unterseite des Bohrers gemäß Fig. 1;
- Fig. 3: eine vergrößerte perspektivische Darstellung eines Schneidkörpers.

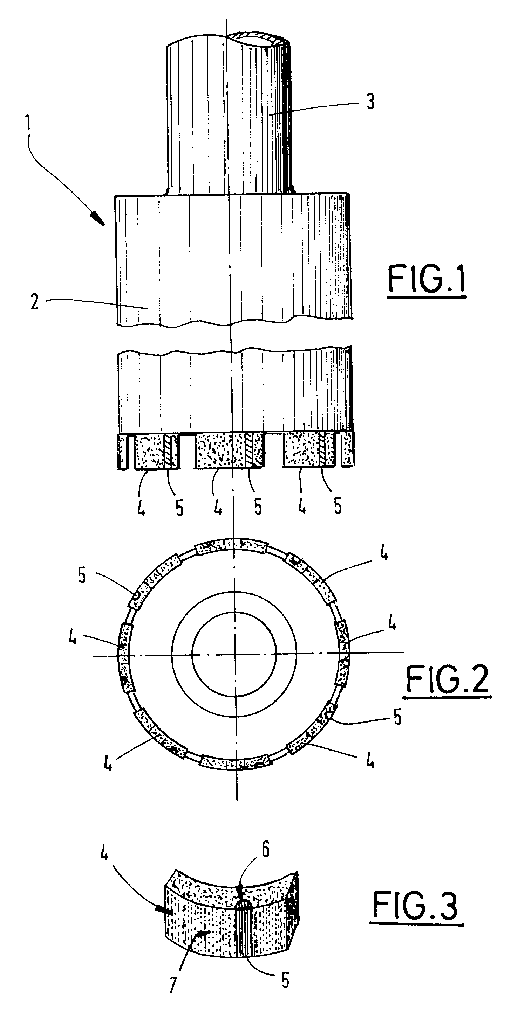

Der in Fig. 1 dargestellte Steinbohrer ist als Ganzes mit 1 bezeichnet. Er besteht aus einem Rohrstück 2, welches im oberen Teil in einen Schaft 3 übergeht. Der Schaft dient zum Einspannen des Bohrers in die Bohrmaschine.

Das Rohrstück 2 ist am unteren Ende mit mehreren Schneidkörpern 4 besetzt, die zu Gruppen zusammengefaßt sind, wie dies insbesondere aus Fig. 2 ersichtlich ist. Die Schneidkörper bestehen aus Diamantkristallen, welche mit Kobalt abgebunden sind. Sie sind beispielsweise durch Löten mit dem Rohrstück 2 fest verbunden.

In jedem Schneidkörper 4 ist eine Markierung 5 eingesintert. Im dargestellten Ausführungsbeispiel besteht die Markierung aus einer in Verschleißrichtung des Schneidkörpers verlaufenden Spur. Diese Spur wurde hergestellt, indem ein Metalldraht oder Stab 6 in den Schneidkörper mit eingesintert worden ist. Zur näheren Kennzeichnung der vorliegenden Schneidkörpersorte können mehrere Markierungen mit eingearbeitet sein, welche gleiche oder unterschiedliche Farben, beispielsweise rot (Kupfer) und gelb (Messing) haben.

Wie Fig. 3 zeigt, können die Markierungen 5 im Bereich der äußeren Mantelfläche 7 angeordnet sein. Diese Anordnung stellt den Regelfall dar. Es ist aber auch möglich, die Markierungen in der inneren Mantelfläche anzubringen.

## Patentansprüche

1. Werkzeug für die Bearbeitung von Beton, Gestein oder Fels, wie Bohrer oder Säge, dessen Arbeitskanten mit Schneidkörpern aus metallgebundenen Diamantkristallen armiert sind,
dadurch gekennzeichnet,
daß in wenigstens eine Oberfläche der Schneidkörper (4) wenigstens eine von außen sichtbare Markierung (5) eingesintert ist, die aus einem Werkstoff besteht, der sich farblich vom Bindemittel des Schneidkörpers unterscheidet, derart, daß die Markierung (5) auch bei reibender Beanspruchung nicht verlorengeht.

2. Werkzeug nach Anspruch 1,
dadurch gekennzeichnet,
daß die Markierung (5) eine in Verschleißrichtung des Schneidkörpers (4) verlaufende Spur ist.

3. Werkzeug nach Anspruch 1 oder 2,
dadurch gekennzeichnet,
daß die Markierung aus einem eingesinterten Metalldraht oder -stab (6) besteht.

4. Werkzeug nach einem der vorausgehenden Ansprüche,
dadurch gekennzeichnet,
daß bei Kobalt- oder Nickel-gebundenen Schneidkörpern die Markierungen aus Kupfer oder bunten Kupfer-Legierungen bestehen.

5. Werkzeug nach einem der vorausgehenden Ansprüche,
dadurch gekennzeichnet,
daß die Markierungen (5) im Bereich der äußeren oder inneren Mantelfläche des Schneidkörpers angeordnet sind.

6. Werkzeug nach einem der vorausgehenden Ansprüche,
dadurch gekennzeichnet,
daß die Markierungen in der Fußfläche des Schneidkörpers angeordnet sind.

## Claims

1. Tool for working in concrete, rock or stone such as drill or saw whose working edges are tipped with sintered diamond cutters which are
characterized in that
at least one surface of the cutter (4) has at least one marking (5) sintered into it and which is visible from without and which consists of a material having a color that distinguishes it from the binding material of the cutter and of such a quality that the marking (5) will not be destroyed even by rubbing.

2. Tool according to claim 1,
characterized in that
the marking (5) is a trace a which runs in the direction of wear of the cutter (4).

3. Tool according to claim 1 or 2,
characterized in that
the marking is made of sintered metallic wire or rod (6).

4. Tool according to any one of the preceding claims,
characterized in that
cobalt or nickel bonded cutters are marked with copper or a colored copper alloy.

5. Tool according to any one of the preceding claims,
characterized in that
the marking (5) are located in the regim of the outer or inner jacket of the cutter (4).

6. Tool according to any one of the preceding claims,
characterized in that
the markings (5) are located on the base surface of the cutter (4).

## Revendications

1. Outil pour le travail du béton, de la pierre ou de la roche, tel que foret ou scie, dont les arêtes de travail sont armées d'éléments de coupe en cristaux de diamant liés par du métal,
caractérisé par le fait
qu'au moins une face des éléments de coupe (4) est dote au moins d'un marquage (5) visible de l'extérieur, inséré par frittage, et constitué par un materiau dont la couleur diffère de celle du liant de l'élément de coupe, de sorte que le marquage (5) ne soit pa détruit même lors d'une sollicitation par frottement.

2. Outil selon la revendication 1,
caractérisé par le fait
que le marquage (5) est une trace allant dans le sens d'usure de l'élément de coupe (4).

3. Outil selon la revendication 1 ou 2,
caractérisé par le fait
que le marquage se compose d'un fil ou d'un barreau métallique (6) inséré par frittage.

4. Outil selon une des revendications précédentes
caractérisé par le fait
que sur les éléments de coupe à liant en cobalt ou nickel, les marquages (5) sont en cuivre ou en alliage non ferreux à base de cuivre.

5. Outil selon une des revendications précédentes
caractérisé par le fait
que les marquages (5) sont disposés dans la zone de la surface enveloppe externe ou interne de l'élément de coupe (4).

6. Outil selon une des revendications précédentes
caractérisé par le fait
que les marquages (5) sont disposés dans la surface de base de l'élement de coupe (4).
